(19) Europäisches Patentamt
European Patent Office
Office européen des brevets

(11) EP 0 745 844 A2

(12) **EUROPEAN PATENT APPLICATION**

(43) Date of publication:
04.12.1996 Bulletin 1996/49

(51) Int Cl.$^6$: **G01N 27/447**

(21) Application number: 96500021.9

(22) Date of filing: 07.02.1996

(84) Designated Contracting States:
DE ES FR GB IT

(30) Priority: 07.02.1995 CU 995

(71) Applicant: **CENTRO NACIONAL DE INVESTIGACIONES CIENTIFICAS**
La Habana (CU)

(72) Inventors:
• **Riveron Rojas, Ana M.**
Ciudad de la Habana (CU)

• **Orozco Orozco, Esther**
Mexico, D.F. (MX)
• **Lopez Canovas, Lidia**
Ciudad de la Habana (CU)
• **Herrera Isidron, José A.**, Calle Nueva, No.13408
San Miguel del Pa., Ciudad de la Habana (CU)

(74) Representative: **Gil-Vega, Victor**
Estébanez Calderon, 3 - 5B
28020 Madrid (ES)

(54) **Apparatus for separating DNA molecules of chromosomal size by electrophoresis**

(57) This invention provides a method for fast resolving chromosome sized DNA molecules, and for obtaining reliable and reproducible DNA electrophoretic patterns. It is achieved by performing pulsed field minigel electrophoresis at a high electric field strength at expense of reducing the separation between opposed electrodes. This approach allows to increase the frequency needed to separate DNA molecules, diminishing the electrophoresis time. It also favors the reduction of the electrophoretic chamber, and the increase of the electric resistance in the chamber. This, together with the achievement of high electric field at low applied voltage, avoids the excess of heat generation in the electrophoretic chamber, allowing the use of simple cooling systems and power supplies. The method saves time, samples and reagents.

EP 0 745 844 A2

## Description

The present invention relates to the areas of biotechnology and molecular biology, and more specifically to the pulsed-field electrophoresis (PFE) of DNA.

The apparatus finds application, moreover, in other areas such as:

Microbiology and parasitology: for obtaining electrophoretic karyotypes of parasites, yeasts and microorganisms. Human genetics: in the study of large regions of the human genome.

At the present time, for the separation of DNA molecules of chromosomal size, the following systems and methodologies are known:

### 1. - Conventional pulsed-field electrophoresis of DNA

a) The Geneline™ II apparatus (US Pat. No. 4,740,283) developed by the firm Beckman Instruments Inc. is based on the arrangement known as TAFE (transverse alternating pulsed-field electrophoresis) and uses a gel measuring 14.2 cm (length) $\times$ 15 cm (width) $\times$ 0.3 cm (thickness).

b) The CHEF-DR III apparatus (US Pat. No. 5,084,157) of BioRad laboratories is a PFE system with a variable angle between the electrodes, is based on the arrangement known as CHEF (contour-clamped homogeneous electric field) and uses a gel measuring 14 cm $\times$ 13 cm.

The apparatuses mentioned above are capable of separating DNA molecules of chromosomal size electrophoretically; however:

- Conventional PFE is a relatively slow technique: a normal experiment can take 24 hours to obtain an electrophoretic pattern of eleven chromosomal bands corresponding to DNA molecules smaller than 1.6 Mb ($10^6$ base pairs), and up to a week with molecules up to 12 Mb in size.
- These apparatuses are complex and expensive, and use relatively large amounts of reagents which are also expensive (such as Tris and agarose) and of biological sample. The latter aspect may prove prohibitive for some applications (e.g. clinical diagnosis).
- The apparatuses mentioned above generate a large amount of heat in the electrophoresis chamber (this amount depends on the voltage applied to the electrodes and the current intensity passing through the buffer). If it is desired to increase the electric field (for the purpose of increasing the speed of separation), this has to be done at the cost of increasing the potential difference at the electrodes, and consequently the current intensity. This (through the Joule effect) would increase heat generation in the electrophoresis chamber. An excessive increase in the amount of heat broadens the bands and makes them more diffuse, and causes distortion of the electrophoretic pattern, even reaching the point of trapping the DNA molecules in the pores of the gel and of a complete absence of migration.

c) AFIGE (asymmetric field-inversion gel electrophoresis) system, and which consists in applying a field of 25 volts/cm in the reverse direction to the net direction of migration for a short space of time (reverse pulse), followed by another one, longer and in the same direction as the net migration but of only 5 volts/cm (forward pulse). By repeating this sequence many times, electrophoretic separation is obtained.

This apparatus uses a 24-cm gel so that, in order to obtain such fields, at least 600 volts have to be applied in the reverse direction and 125 in the forward direction.

To dissipate the amount of heat generated in the electrophoresis chamber by the application of these voltages, a flow of buffer (at 10°C) of 120 ml/minute is needed.

Lastly, this apparatus takes 28 hours to obtain the karyotype of S. cerevisiae (strain Kt158), applying the forward pulse for 125 seconds and the reverse pulse for 12.5 seconds. For this reason, it is not correct to assert that the PFE was carried out at high electric fields: the ratio of the time of application of the forward field (at low field) to the reverse field (at high field) is several times greater than one.

### 2. - Capillary electrophoresis of DNA

This technology uses fine and small gels and high electric fields, permitting good separation of macromolecules in a short time. However, with this technique, it has not been possible to separate even molecules above 166 kb in size.

Recently, a technique has been reported for the individual microscopic study of fluorescent DNA molecules. It permits observation of the reorientation and migration of DNA under the action of pulsed electric fields applied at different angles. In this technique, an agarose gel mixed with DNA molecules of a particular size is prepared on the stage of a microscope. To this gel are applied different electrical pulses, and the microscopic images are recorded with a video camera. These apparatuses were called by their authors "minipulsed electrophoresis apparatuses. and "minipulsed electrophoresis chambers".·

However, a more detailed analysis of these apparatuses reveals:

1. - These apparatuses are designed for the single purpose of studying individual DNA molecules microscopically under the action of electric fields, whereas it is accepted that PFE is a technique which enables DNA molecules of chromosomal size to be separated into their characteristic patterns of bands, or karyotypes.

2. - It has been reported that it is difficult to keep the electric field homogeneous within the gel. Neither is temperature control possible, and it is difficult to keep the conductivity and buffer capacity of the solutions employed stable.

3. - These apparatuses are not really PFE apparatuses, since they do not actually maintain the geometrical relationship between the electrode set-up and the position of the gel. Moreover, they are incapable of generating reproducible electrophoretic patterns.

4. - The use of these apparatuses is limited, since the DNA molecules cannot be separated in a preparative manner. This means that they cannot be used, for example, to purify and clone a given chromosomal DNA fragment.

The proposed approach establishes a method for the rapid analytical and preparative separation of DNA molecules of chromosomal size, and for obtaining reliable and reproducible electrophoretic patterns. This apparatus makes it possible to carry out minipulsed-field electrophoresis (miniPFE) at high electric fields. These electric fields are obtained as a result of reducing the distance between pairs of opposed electrodes. This approach enables the pulse time needed for separating the DNA molecules to be decreased, thereby reducing the total electrophoresis time.

Excess generation of heat is avoided by: a) the increase in the electric field is achieved by reducing the distance between opposed electrodes, and not by increasing the voltage, b) the dimensions of the electrophoresis chamber are reduced, which decreases the intensity of the electric current flowing through it and decreases its electrical resistance.

This apparatus maintains the proportions between the electrode set-up and the size and arrangement of the gel in conventional PFE apparatuses. It separates the molecules using small amounts of sample, using appropriate miniPFE apparatuses. Electrophoresis is carried out using simple cooling and electrophoresis source systems.

The following figures are attached:

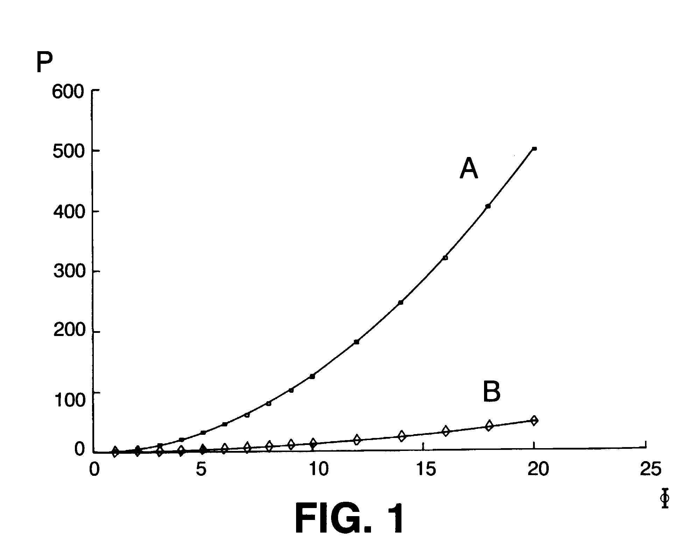

. Figure 1. Generation of power as a function of the electric field in two CHEF model PFE chambers of different sizes (A) and (B).

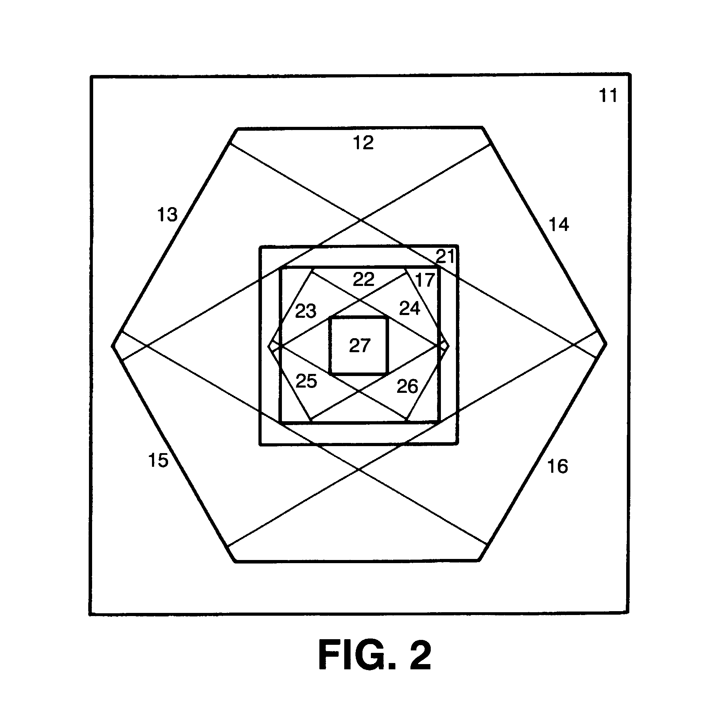

. Figure 2. Comparison between the electrode platforms of a PFE apparatus with another, miniPFE apparatus, both CHEF model.

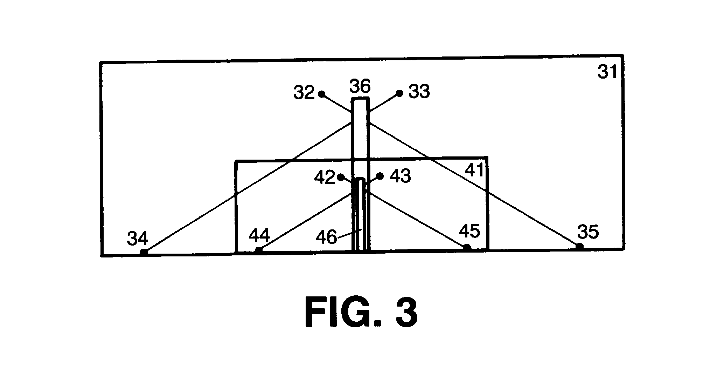

. Figure 3. Comparison between the electrode platforms of a PFE apparatus with another, miniPFE apparatus, both TAFE model.

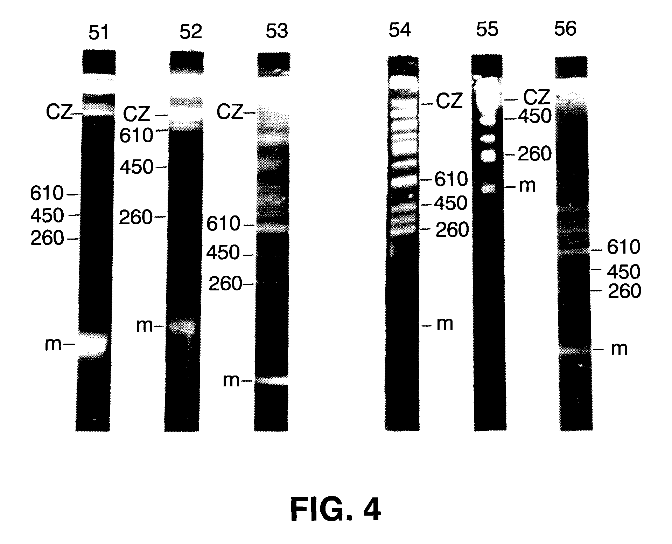

. Figure 4. Comparison between the electrophoretic patterns obtained in two CHEF and TAFE model conventional PFE apparatuses with those obtained in two miniPFE apparatuses of these models.

The method for carrying out rapid PFE is associated with the appropriate reduction in the dimensions of the electrode platform and the electrophoretic chamber. The reduction of the distance between opposed electrodes should be carried out as follows:

Hereinafter, we shall designate those magnitudes relating to miniPFE apparatuses by the subscript M, and the magnitudes relating to conventional PFE apparatuses by the subscript L.

The distance $l_M$ between the pairs of opposed electrodes of a miniPFE apparatus needed for carrying out a miniPFE, of duration $te_M$, with respect to the duration $te_L$ of a PFE carried out in a conventional apparatus, of separation $l_L$ between pairs of opposed electrodes, may be calculated approximately according to:

$$l_M = l_L \times (te_M/te_L) \times (0.55) \qquad (\alpha)$$

It is recommended that the miniPFE be carried out at an electric field increased by 2.5 to 250 times with respect to the electric field applied in a conventional PFE, which permits a total time of miniPFE reduced by between 1.5 and 150 times with respect to the total time of the PFE.

Once $l_M$ has been determined, the ratio of the length of the gel (LG) to the distance (l) between the pairs of opposed electrodes of a conventional PFE apparatus should be maintained. Accordingly, for a reduction factor $n = (l_L/l_M)$, the gel length and gel height (hG) should be reduced according to:

$$LG_M = (LG_L/I_L) \times I_M \text{ and } hG_M = 0.1 \times (LG_L/I_L) \times I_M \tag{$\beta$}$$

The width and length of the electrophoresis chamber should also be reduced n times, while the height may be reduced arbitrarily. The area of the chamber and the height of the buffer (which should be sufficient to cover the gel) will determine the final volume of buffer needed for carrying out the electrophoresis.

The use of miniPFE apparatuses is associated with the use of simpler cooling system, since the generation of heat in the electrophoresis chamber decreases. The following formula establishes approximately the flow of cold buffer at a temperature (Tc) needed to keep the temperature (Te) of the buffer in the electrophoresis chamber stable:

$$J = V^2 / [4.18 \times R \times (Te\text{-}Tc)] \tag{$\delta$}$$

where J is the flow (in ml/second), R the electrical resistance of the chamber and V the applied voltage.

The samples may be prepared in the conventional manner and cut up later with a knife or scalpel or prepared in appropriate moulds. The minigels may be poured into suitable moulds according to their size. The samples are placed in the corresponding slots, located in a position where the pulsed electric fields cause a net migration of the DNA molecules through the gel.

After the electrophoresis, the minigels are stained with a conventional solution of ethidium bromide.

The following table shows a comparison between the main dimensions and experimental parameters of a conventional PFE apparatus and two miniPFE apparatuses, calculated according to the formulae above.

Table I

| PFE parameters | conventional PFE | miniPFE | |
|---|---|---|---|
| | Version A | Version B | Version C |
| distance between opposed electrodes (cm) | 27 | 11 | 4.3 |
| gel area (cm$^2$) | 10.4 $\times$ 10.4 | 4.1 $\times$ 4.1 | 1.5 |
| gel thickness (cm) | 1 | 0.5 | 0.1 |
| gel volume (cm$^3$) | 108.1 | 8.4 | 0.225 |
| buffer volume (ml) | 3000 | 350 | 50 |
| sample volume ($\mu$l) | 140 | 15 | 7.5 |
| electrophoresis time for S. cerevisiae DNA | 24 hours | 4 hours | 80 minutes |

Figure 1 enables the differences in heat generation in the electrophoretic chamber to be compared between two apparatuses, one a PFE apparatus (1) and the other a miniPFE apparatus (2).

The diagrammatic representation of two miniPFE apparatuses (CHEF and TAFE models) is shown below by way of example in comparison with their equivalent conventional PFE apparatuses.

Inside the conventional CHEF chamber (11) (Figure 2), the electrode platform (12) is placed. The electrodes (or groups of electrodes) (13), (14), (15) and (16) are placed on the sides of the hexagonal perimeter of the electrode platform (12). The electrode pairs (13) - (16) and (14) - (15) generate a pair of homogeneous electric fields. The relative position of the electrode pair (13) and (16) determines a zone of homogeneous electric field corresponding to the first electric field. The relative position of the electrode pair (14) and (15) determines a zone of homogenous electric field corresponding to the second electric field. The active zone is localized at the intersection of the two fields. The gel (17) is placed in this zone.

The miniCHEF chamber (21) is drawn within the CHEF chamber (11). Inside the miniCHEF chamber (21), the electrode platform (22) is placed. The electrodes (or groups of electrodes (23), (24), (25) and (26) are placed on the sides of the hexagonal perimeter of the electrode platform (22). The electrode pairs (23) - (26) and (24) - (25) generate a pair of homogeneous electric fields. The relative position of the electrode pair (23) and (26) determines a zone of homogeneous electric field corresponding to the first electric field. The relative position of the electrode pair (24) and (25) determines a zone of homogeneous electric field corresponding to the second electric field. The active zone is localized at the intersection of the two fields. The gel (27) is placed in this zone.

Table II describes an example of miniCHEF and of CHEF which are similar to those described above.

Table II

| PFE chamber | Buffer volume (litres) | 1 (cm) | Gel thickness (cm) | Gel length (LG in cm) | I/LG ratio |
|---|---|---|---|---|---|
| CHEF 11 | 3.00 | 27.0 | 1.0 | 10.4 | 2.59 |
| MiniCHEF 21 | 0.35 | 10.4 | 0.5 | 4.1 | 2.54 |
| Ratio | 8.57 | 2.6 | 2.0 | 2.5 | 1.02 |
| I: Distance between pairs of opposed electrodes | | | | | |

Inside the conventional TAFE chamber (31) (Figure 3), the opposed electrodes (32), (33), (34) and (35) are placed. The electrode pairs (32) - (35) and (33) - (34) generate a pair of homogeneous electric fields. The relative position of the electrode pair (32) and (35) determines a zone of homogeneous electric field corresponding to the first electric field. The relative position of the electrode pair (33) and (34) determines a zone of homogeneous electric field corresponding to the second electric field. The active zone is localized at the intersection of the two fields. The gel (36) in placed transversely in the active zone. The vectors associated with these electric fields intersect inside the gel at an angle of 115°. This angle increases through the gel.

A diagram of the miniTAFE chamber (41) is seen within the TAFE chamber (31). Inside the miniTAFE chamber (41), the electrodes (42), (43), (44) and (45) are placed. The electrode pairs (42) - (45) and (43) - (44) generate a pair of homogeneous electric fields. The relative position of the electrode pair (42) and (45) determines a zone of homogeneous electric field corresponding to the first electric field. The relative position of the electrode pair (43) and (44) determines a zone of homogeneous electric field corresponding to the second electric field. The active zone is localized at the intersection of the two fields. The gel (36) is placed transversely in the active zone. The vectors associated with these electric fields intersect inside the gel at an angle of 115°. This angle increases through the gel.

Table III describes an example of miniTAFE and of TAFE which are similar to those described above.

Table III

| PFE chamber | Buffer volume (litres) | 1 (cm) | Gel thickness (cm) | Gel length (LG in cm) | I/LG ratio |
|---|---|---|---|---|---|
| TAFE 31 | 3.50 | 20 | 0.6 | 10.3 | 1.94 |
| MiniTAFE 41 | 0.35 | 7.7 | 0.4 | 4.0 | 1.92 |
| Ratio | 10 | 2.6 | 1.5 | 2.6 | 1.01 |
| I: Distance between pairs of opposed electrodes | | | | | |

By way of example, the characteristics of the cooling systems used with the above PFE and miniPFE apparatuses are indicated.

To carry out a PFE in the chamber A (Table I) at 20°C, cooled with buffer at 3°C (working temperature of a normal cryostat), a flow of 113 ml/minute is needed in order to dissipate the heat generated by a field of 10.4 volts/cm. Under the same experimental conditions, in the miniPFE chamber B (Table I), a flow of only 12.4 ml/minute is needed. This flow may be achieved with a simpler peristaltic pump. If the working temperature of the cryostat were 15°C (that is to say a much simpler cooling system), an experiment carried out in the PFE chamber A would need a flow of 394.2 ml/minute, while in the miniPFE chamber B, a flow of 42.3 ml/minute would be sufficient.

By way of example, and to facilitate still further the understanding of the present invention, the experimental conditions which enabled the chromosomes of Saccharomyces cerevisiae (S. cer.) to be separated in chambers of different sizes are presented.

Figure 4 shows the electrophoretic patterns of S. cer. obtained at a pulse time (tp) of one hundred and fifty seconds during electrophoresis times (te) of twenty-four hours in a conventional CHEF apparatus, and at a tp of fifty seconds and a te of 3.4 hours in a miniCHEF apparatus, these apparatuses being similar to the ones described in Table II.

It should be noted that the CHEF apparatus separated ten chromosomal bands (51) using a tp of one hundred seconds and a te of twenty-four hours, and obtained a pattern of only four bands (52) at a tp of fifty seconds and the same te. The miniCHEF separated ten bands (53) in a te of only 3.2 hours and a tp of fifty seconds. Further details are given in Table IV.

Table IV

| Pattern | E (volt/cm) | 1 (cm) | tp (sec) | Np | te (hours) | No. of bands | Mf |
|---|---|---|---|---|---|---|---|
| 51 | 6.1 | 27 | 100 | 432 | 24 | 10 | 0.78 |
| 52 | 6.1 | 27 | 50 | 864 | 24 | 4 | 0.78 |

Table IV (continued)

| Pattern | E (volt/cm) | 1 (cm) | tp (sec) | Np | te (hours) | No. of bands | Mf |
|---|---|---|---|---|---|---|---|
| 53 | 13.1 | 11 | 50 | 115 | 3.2 | 10 | 1.98 |
| Mf: Magnification factor of the photograph (ratio of the length of the gel in the photograph to the actual length of the gel) | | | | | | | |

Figure 4 also shows the electrophoretic patterns of S. cer. obtained at a pulse time (tp) of one hundred and fifty seconds during electrophoresis times (te) of twenty-four hours in a conventional TAFE apparatus, and at a tp of fifty seconds and a te of 3.4 hours in a miniTAFE apparatus, these apparatuses being similar to the ones described in Table III.

It should be noted that the TAFE apparatus separated nine chromosomal bands (54) using a tp of one hundred seconds and a te of twenty-four hours, and obtained a pattern of only five bands (55) at a tp of fifty seconds and the same te. The miniTAFE separated nine bands (56) in a te of only 3.2 hours and a tp of fifty seconds. Further details are given in Table V.

Table V

| Pattern | E (volt/cm) | 1 (cm) | tp (sec) | Np | te (hours) | No. of bands | Mf |
|---|---|---|---|---|---|---|---|
| 54 | 7.5 | 20 | 100 | 432 | 24 | 9 | 0.79 |
| 55 | 7.5 | 20 | 50 | 864 | 24 | 5 | 0.79 |
| 56 | 12 | 7.7 | 50 | 180 | 5 | 9 | 2.03 |
| Mf: Magnification factor of the photograph (ratio of the length of the gel in the photograph to the actual length of the gel) | | | | | | | |

It is concluded from all of the foregoing that electric fields of up to twenty-two volts/cm may be used in order to obtain electrophoretic patterns in miniTAFE, and that a simple cooling system was sufficient to keep the temperature of the buffer stable at 20°C.

The PFE apparatuses of the present invention have been described with particular examples so that they may be more readily understood. It should be understood that such examples are in no way limitative of the scope of the invention which follows. PFE apparatuses of other sizes, models and number of electrodes (continuous or discontinuous) different from those exemplified here are contained within the scope of this patent.

Other types of electrode platforms, such as ST/RIDE (simultaneous tangential/rectangular inversion decussate electrophoresis), RGE (rotating gel electrophoresis), RFE (rotating electric field gel electrophoresis), OFAGE (orthogonal field-alternation gel electrophoresis), PACE (programmable autonomously controlled electrode platforms), and the like, may be modified, like the apparatus or apparatuses described in the present invention, without falling outside the scope of the present invention.

The miniPFE apparatuses developed with this technique display the following advantages:

1 - They consume a small amount of chemical and biological reagents: they use a smaller volume of buffer solution, smaller and thinner gels and a smaller amount of sample than in the conventional chambers.

2 - High electric fields are achieved using less powerful power sources than those used in conventional PFE.

3 - Heat generation is less than in conventional PFE, which enables cooling systems with a small ejection volume (10 times less) to be used.

4 - Electrophoresis times in the miniapparatuses are reduced 5-fold relative to conventional PFE systems.

5 - They possess the same power of resolution as conventional apparatuses.

6 - They are useful for analytical and preparative applications.

7 - The miniapparatuses occupy at least four times less space than the chambers of conventional PFE systems.

8 - Computerized control of the electrophoresis ensures the accuracy of the parameters of the electrophoresis (pulse and electrophoresis times), enabling the latter to be reestablished in the event of interruptions.

9 - The use of a resident program enables the computer to be used in other tasks even when it is controlling the electrophoresis.

## Claims

1. Apparatus for separating DNA molecules of chromosomal size by electrophoresis, which comprises an electrophoresis chamber in which is placed an electrode platform, on the sides of the hexagonal perimeter of which are located electrodes (or groups of electrodes), a buffer solution and a gel wherein are placed the molecules which are going to be separated electrophoretically by means of an electric field of specified magnitude and direction, and characterized in that its dimensions are calculated on the basis of a conventional larger apparatus based on the formulae:

$$I_M = I_L \times (te_M/te_L) \times (0.55)$$

$$LG_M = (LG_L/I_L) \times I_M$$

$$hG_M = 0.1 \times (LG_L/I_L) \times I_M$$

where:

$I_M$ and $I_L$ are the distances between the pairs of opposed electrodes in a miniPFE apparatus and a PFE apparatus, respectively;
$te_M$ and $te_L$ are the electrophoresis times in a miniPFE apparatus and a PFE apparatus, respectively;
$LG_M$ and $hG_M$ are the length and height (thickness) of the gel used in a miniPFE apparatus.

2. Apparatus for separating DNA molecules of chromosomal size by electrophoresis, which, according to Claim 1, due to the reduced distance between the pairs of opposed electrodes (or groups of electrodes), is characterized in that it permits minipulsed-field electrophoresis at high electric fields increased by between 2.5 and 250 times with respect to the electric field applied in a conventional PFE, and total electrophoresis times reduced by between 1.5 and 150 times with respect to the total time of the PFE.

FIG. 1

# FIG. 2

# FIG. 3

**FIG. 4**